# EUROPÄISCHE PATENTSCHRIFT

(11) **EP 1 920 961 B1**
(45) Veröffentlichungstag und Bekanntmachung des Hinweises auf die Patenterteilung: **08.06.2011**
(21) Anmeldenummer: 07018342.1
(22) Anmeldetag: 19.09.2007
(51) Int. Cl.: B60J 7/12

(54) **Verdeck für ein Cabriolet**
Soft top for a convertible
Capote pour un cabriolet

(30) Priorität: 07.11.2006 DE 102006052335
(43) Veröffentlichungstag der Anmeldung: 14.05.2008
(73) Patentinhaber: Dr. Ing. h.c. F. Porsche AG, 70435 Stuttgart (DE)
(72) Erfinder: Czechtizky, Timo, 73119 Zell u. A. (DE)

(56) Entgegenhaltungen:
- EP-A1- 0 351 378
- EP-A1- 1 354 742
- EP-A2- 1 285 799
- WO-A1-2005/039911
- DE-A1- 3 914 639
- DE-A1- 10 201 871
- DE-B3-102005 047 846
- DE-U1-202004 018 662

## Beschreibung

Bei der Erfindung wird ausgegangen von einem Verdeck für ein Cabriolet, gemäß Oberbegriff des Patentanspruchs 1.

Ein gattungsbildendes Verdeck für ein Cabriolet ist aus der DE 102 01 871 U1 bekannt. Das Verdeck besitzt ein Hauptgestell mit einem an der Karosserie befestigten Verdecklager und einem Hauptgestänge, das an dem Verdecklager bewegbar angelenkt ist, so dass das Verdeck von einer einen Fahrgastraum überspannenden Schließstellung in eine heckseitige Ablagestellung und umgekehrt verlagert werden kann. Ferner umfasst das Verdeck einen heckseitigen Stoffspannspriegel, der um eine Spriegelschwenkachse bewegbar ist und dadurch aus seiner etwa waagrechten Spannstellung, in der er auf einem Verdeckkastendeckel aufliegt, in eine angehobene Schwenkstellung, in der er den Verdeckkastendeckel zum Öffnen freigibt, angehoben werden kann. An dem Hauptgestänge und Stoffspannspriegel ist zumindest abschnittweise ein Verdeckbezug befestigt, der in der Schließstellung des Verdecks zumindest von dem Stoffspannspriegel gespannt wird. Wird der Stoffspannspriegel in die Schwenkstellung angehoben, entspannt sich außerdem der Verdeckbezug und das Verdeck mit dem Hauptgestänge kann in die Ablagestellung bewegt werden, nachdem der Verdeckkastendeckel geöffnet und Stoffspannspriegel wieder abgesenkt wurde. Für das Anheben des Stoffspannspriegels von der Spannstellung in die Schwenkstellung und umgekehrt ist eine Kolben-Zylindereinheit vorgesehen, die zusammen mit zwei so genannten Spann- bzw. Sturmstangen eine Antriebs- und Halteeinrichtung bildet, um den Stoffspannspriegel außerdem in der Spannstellung auf dem Verdeckkastendeckel halten zu können.

Üblicherweise ist bei einem solchen Verdeck die Spriegelschwenkachse des Stoffspannspriegels am Hauptgestänge angeordnet, insbesondere an einem Lenker des Hauptgestänges, wie beispielsweise die DE 39 14 639 A1 beschreibt.

Aufgabe der Erfindung ist es daher, ein Verdeck der eingangs genannten Art anzugeben, bei dem die Ablagebewegung optimiert ist.

Gelöst wird diese Aufgabe mit einem Verdeck, das die in Anspruch 1 genannten Merkmale aufweist. Ausgestaltungen der Erfindung sind Gegenstand der abhängigen Patentansprüche.

Die mit der Erfindung hauptsächlich erzielten Vorteile sind folgende: Der Stoffspannspriegel kann in seinem vorderen Bereich, also nahe an seiner Spriegelschwenkachse, optimiert, vorzugsweise besonders tief, in einen Verdeckkasten abgelegt werden. Dadurch kann eine stark gebogene Form des hinteren Dachrahmenabschnitts umgesetzt werden. Dies wird dadurch erreicht, dass der Stoffspannspriegel zusammen mit dem Spannspriegelhalter um dessen Halterschwenkachse bei der Ablagebewegung des Verdecks verschwenkt wird. Die Lage dieser Halterschwenkachse, insbesondere gegenüber der Spriegelschwenkachse, kann so gewählt werden, dass die optimale Stellung des Stoffspannspriegels bei abgelegtem Verdeck erreicht wird. Außerdem kann der Stoffspannspriegel in seiner angehobenen Schwenkstellung verbleiben, in die er um seine Spriegelschwenkachse verlagert ist, so dass er zusammen mit dem Verdeck abgelegt werden kann. Auf ein erneutes Absenken des Stoffspannspriegels vor der eigentlichen Verdeckablage kann daher verzichtet werden, was die Dauer für das Ablegen bzw. Öffnen des Verdecks reduziert.

Durch die Anordnung der Spriegelschwenkachse gemäß Anspruch 2 wird in vorteilhafter Weise eine übermäßige Beanspruchung, insbesondere ein Strecken, des Verdeckbezugs beim Anheben des Stoffspannspriegels vermieden.

Liegt in einem bevorzugten Ausführungsbeispiel die Halterschwenkachse des Spannspriegelhalters oberhalb der Spriegelschwenkachse (Anspruch 3) und insbesondere oberhalb des Verdeckbezugrandes (Anspruch 4), kann der vordere Bereich des Stoffspannspriegels beim Ablegen des Verdecks besonders tief in den Verdeckkasten hineinbewegt werden. Dadurch reduziert sich die Packhöhe des abgelegten Verdecks.

Bei einem bevorzugten Ausführungsbeispiel nach Anspruch 5 ist der Spannspriegelhalter mit seiner Halterschwenkachse an dem Hauptgestänge angelenkt. Grundsätzlich wäre es jedoch alternativ denkbar, die Halterschwenkachse am Verdecklager vorzusehen.

Gemäß Anspruch 6 werden die Bewegung des Spannbügelhalters und damit auch die Bewegung des Stoffspannspriegels mit der Bewegung des Hauptgestänges durch eine Koppeleinrichtung gesteuert. Insbesondere ist hierfür für eine einfache und kostengünstige Lösung ein Spannspriegellenker nach Anspruch 7 vorgesehen.

Besonders bevorzugt wird ein Ausführungsbeispiel mit den in Anspruch 8 genannten Merkmalen, um die Bewegung des Stoffspannspriegels mit der Ablagebewegung des Verdecks zu koppeln.

Um die Bewegung des Spannspriegelhalters zusammen mit dem Stoffspannspriegel weiter zu verbessern, sind entsprechend Anspruch 9 die Schwenkachsen der relevanten Bauteile so angeordnet, dass sie die Gelenke eines Viergelenks bilden, wodurch neben einer Rotationsbewegung auch ein translatorische Bewegung des Stoffspannspriegels erreicht wird, um seine bevorzugte tiefe Lage bei abgelegtem Verdeck zu erreichen.

Weitere Ausführungsbeispiele sind in den übrigen abhängigen Ansprüchen angegeben und im Zusammenhang mit der nachfolgenden detaillierten Beschreibung der Erfindung näher erläutert.

Die Erfindung wird nachfolgend anhand von Ausführungsbeispielen mit Bezug auf die Zeichnung näher erläutert. Es zeigen:
- Fig. 1: ausschnittweise ein Verdeck in Schließstellung,
- Fig. 2: das Verdeck aus Fig. 1, jedoch mit angehobenem Stoffspannspriegel,
- Fig. 3: das Verdeck aus Fig. 3 und einen geöffneten Verdeckkastendeckel des Cabriolets,
- Fig. 4: das Verdeck in einer Zwischenstellung während einer Ablagebewegung,
- Fig. 5: das Verdeck in vollständiger Ablagestellung, jedoch mit noch geöffnetem Verdeckkastendeckel,
- Fig. 6: das Verdeck in vollständiger Ablagestellung und mit geschlossenem Verdeckkastendeckel,
- Fig. 7: einen Spannspriegelhalter nach einem ersten Ausführungsbeispiel und
- Fig. 8: einen Spannspriegelhalter nach einem zweiten Ausführungsbeispiel.

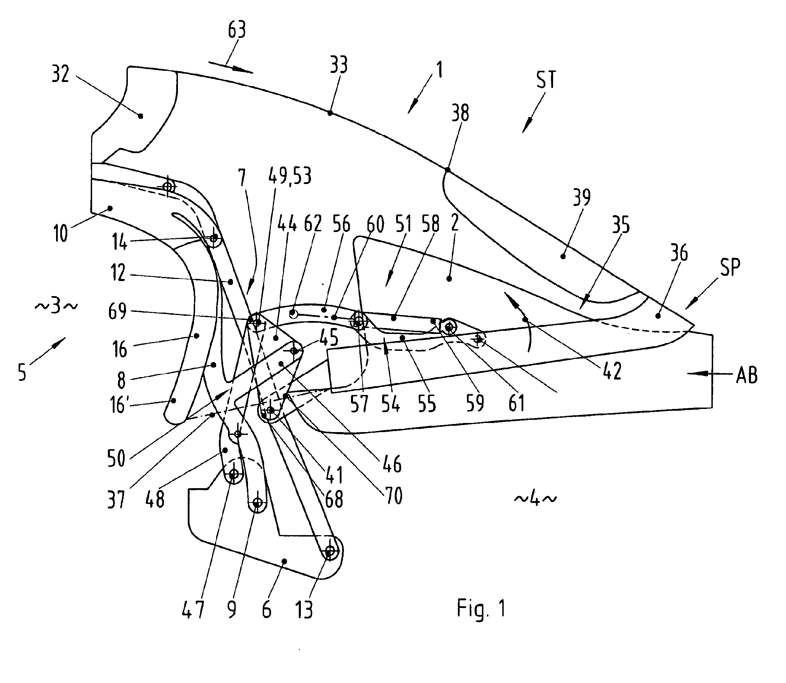

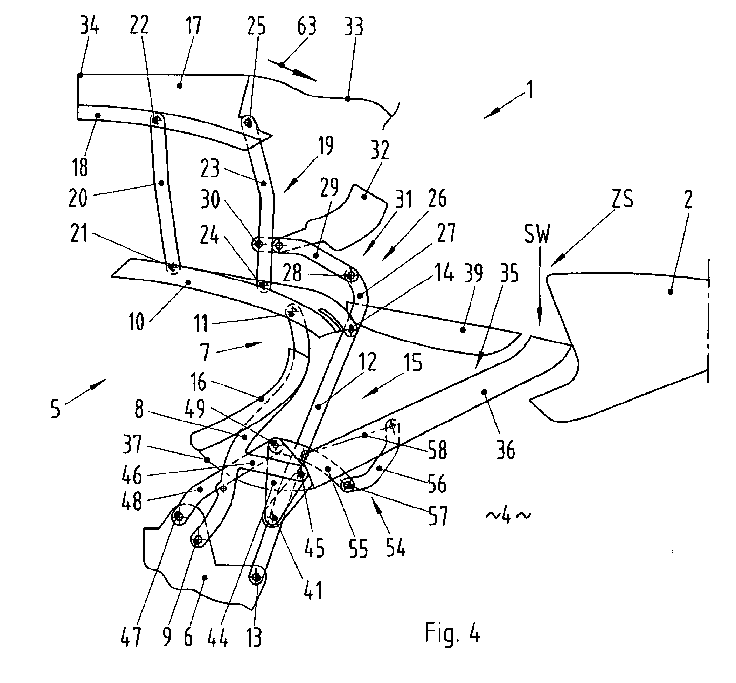

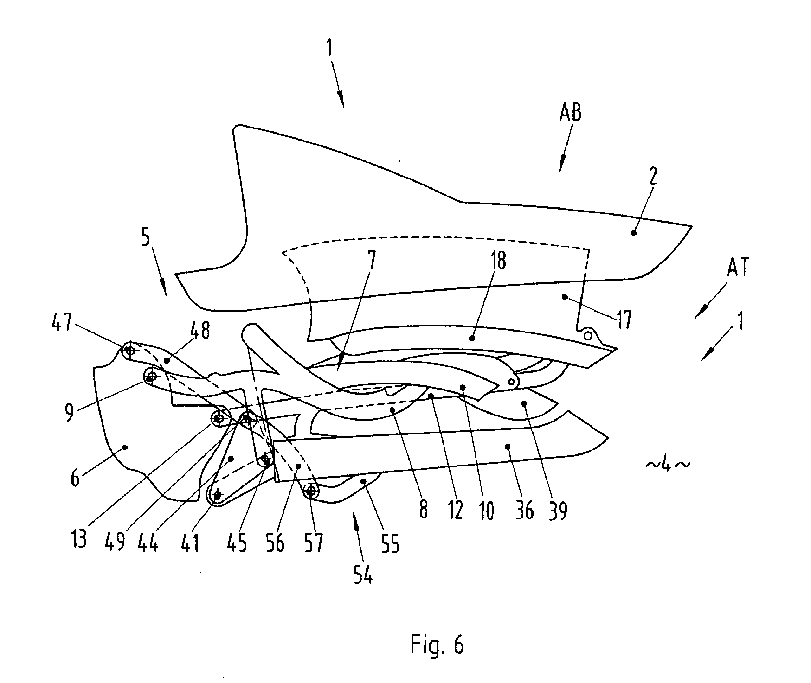

Zunächst wird anhand von Fig. 4 ein Verdeck 1 näher erläutert. Das Verdeck 1 wird für einen offenen Personenkraftwagen, insbesondere Cabriolet, verwendet, von dem hier lediglich ein Verdeckkastendeckel 2 dargestellt ist. Das Verdeck 1 befindet sich in einer Zwischenstellung ZS, in der die einzelnen Bauteile des Verdecks 1 eindeutig zu erkennen sind. Die Zwischenstellung ZS liegt zwischen einer Schließstellung ST (siehe Fig. 1), in der das Verdeck 1 einen Fahrgastraum 3 überspannt, und einer vollständigen Ablagestellung AT (siehe Fig. 6), in der das Verdeck 1 in einem hier nicht näher dargestellten Verdeckkasten 4 des Cabriolets zusammengefaltet abgelegt ist und der Verdeckkasten 4 von dem Verdeckkastendeckel 2 verschlossen wird. In der Ablagestellung AT gibt das Verdeck 1 den Fahrgastraum 3 nach oben hin frei.

Das Verdeck 1 ist wie folgt aufgebaut: Ein auch als Hauptlagereinrichtung bezeichnetes Hauptgestell 5 setzt sich zusammen aus einem Verdecklager 6 und einem daran bewegbar angelenkten Hauptgestänge 7, um das Verdeck 1 in die vorstehend beschriebene Schließstellung ST und die Ablagestellung AT verlagern zu können. Das Verdecklager 6 kann als separates, mit der Karosserie des Cabriolets verbindbares Bauteil oder alternativ einteilig mit der Karosserie des Cabriolets ausgebildet sein. Vorzugsweise ist das Verdecklager 6 jedoch als separates Bauteil, insbesondere Gussteil, hergestellt. Das an dem Verdecklager 6 schwenkbar angelenkte Hauptgestänge 7 umfasst einen ersten bzw. vorderen Lenker 8, der auch als Dachlenker bezeichnet werden kann und der in einem ersten Hauptschwenklager 9 mit dem Verdecklager 6 verbunden ist. Der erste Lenker 8 reicht bis zu einem mittleren Dachrahmenabschnitt 10 und ist dort in einem zweiten Schwenklager 11 angelenkt. Dem Hauptgestänge 7 ist ferner ein zweiter bzw. hinterer Lenker 12 zugeordnet, der in einem dritten Hauptschwenklager 13 mit dem Verdecklager 6 und mit einem vierten Schwenklager 14 mit dem mittleren Dachrahmenabschnitt 10 verbunden ist. Die vier Schwenklager 9, 11, 13 und 14 bilden somit die Gelenke einer Viergelenkanordnung, die im Ausführungsbeispiel ein Hauptviergelenk 15 des Hauptgestänges bildet. An dem vorderen Lenker 8 ist noch ein hinterer Dachrahmenabschnitt 16 ausgebildet, der sich in Schließstellung ST des Verdecks 1 an den mittleren Dachrahmenabschnitt 10 anschließt, wie Fig. 1 zeigt. Abschnittweise verläuft der Dachrahmenabschnitt 16 deckungsgleich zum ersten Lenker 8, er kann jedoch an seinem unteren Ende 16' eine stärkere Krümmung aufweisen und so von dem ersten Lenker 8 weggerichtet verlaufen.

Das Verdeck 1 umfasst ferner ein vorderes Dachelement 17 mit einem vorderen Dachrahmenabschnitt 18, der sich in Schließstellung ST des Verdecks 1 an den mittleren Dachrahmenabschnitt 10 vorn anschließt. Das vordere Dachelement 17 ist über ein weiteres Viergelenk mit dem mittleren Dachrahmen 10 verbunden, welches auch als Stützviergelenk bzw. Verbindungsviergelenk 19 bezeichnet werden kann. Es umfasst einen vorderen Verbindungslenker 20, der in einer fünften Schwenkachse 21 mit dem mittleren Dachrahmenabschnitt 10 und in einer sechsten Schwenkachse 22 mit dem vorderen Dachelement 8 verbunden ist. Ein hinterer Lenker 23 des Verbindungsviergelenks 19 ist in einer siebten Schwenkachse 24 mit dem mittleren Dachrahmenabschnitt 10 und in einer achten Schwenkachse 25 mit dem vorderen Dachelement 17 verbunden. Mithin bilden die vier Schwenkachsen 21, 22, 24 und 25 die Gelenke des Verbindungsviergelenks 19. Für die Bewegungskoppelung des Dachelements 17 beim Bewegen des Verdecks 1 von der Ablagestellung AT in die Schließstellung ST und umgekehrt ist zwischen dem Hauptviergelenk 15 und dem Verbindungsviergelenk 19 eine Koppelungseinrichtung 26 angeordnet, die im Ausführungsbeispiel folgendermaßen aufgebaut ist: Der zweite Lenker 12 ist über seine vierte Schwenkachse 14 hinaus mit einem Fortsatz 27 versehen, der in einer neunten Schwenkachse 28 mit einem Koppellenker 29 für die beiden Viergelenke 15 und 19 verbunden ist. Der Koppellenker 29 ist mit seinem anderen Ende in einer zehnten Schwenkachse 30 mit dem hinteren Verbindungslenker 23 des Verbindungsviergelenks 19 verbunden. Mithin bilden die Schwenkachsen 14, 24, 28 und 30 die Gelenke eines dritten Viergelenks, das nachfolgend als Koppelviergelenk 31 bezeichnet wird. An dem Koppellenker 29 kann - wie das Ausführungsbeispiel zeigt - noch ein so genannter Spriegel 32 angelenkt sein.

Neben dem Hauptgestell 5 weist das Verdeck 1 noch weitere Elemente auf, die nachfolgend beschrieben sind. Ein Verdeckbezug 33, der in Fig. 4 lediglich angedeutet ist, erstreckt sich von einer vorderen Dachspitze 34 des vorderen Dachelements 17 über das Hauptgestänge 7 hinweg bis zu einer heckseitigen Stoffspanneinrichtung 35, die einen so genannten Stoffspannspriegel 36 umfasst, an dem der Verdeckbezug 33 mit seinem unteren, strichpunktiert eingezeichneten Verdeckbezugrand 37 befestigt ist, der zumindest in Schließstellung ST des Verdecks 1 auch an dem Dachrahmenabschnitt 16 gehalten sein kann. Ferner ist der Verdeckbezug 33 an dem vorderen Dachelement 17 zumindest an der Dachspitze 34 befestigt und damit zumindest abschnittweise mit dem Hauptgestänge 7 verbunden. Ein seitlicher, hier nicht eingezeichneter Verdeckbezugrand wirkt zumindest in Schließstellung ST des Verdecks 1 mit dem seitlichen Dachrahmen zusammen, der aus den Dachrahmenabschnitten 10, 16 und 18 zusammengesetzt ist. Der Verdeckbezug 33 weist außerdem einen heckseitigen Ausschnitt 38 für eine Heckscheibe 39 auf. Die Heckscheibe 39 kann mit dem Verdeckbezug 33 fest, beispielsweise jedoch lösbar, verbunden sein, wofür insbesondere ein hier nicht gezeigter Heckscheibenrahmen vorgesehen sein kann. Die Heckscheibe 39 bzw. ihr Rahmen kann lediglich mit dem Verdeckbezug 33 verbunden sein oder die Heckscheibe 39 bzw. ihr Rahmen kann über eine hier nicht dargestellte Stützeinrichtung bzw. Kinematik auf dem Stoffspannspriegel 36 oder auch an anderen Gestängeteilen des Hauptgestänges 7 abgestützt sein.

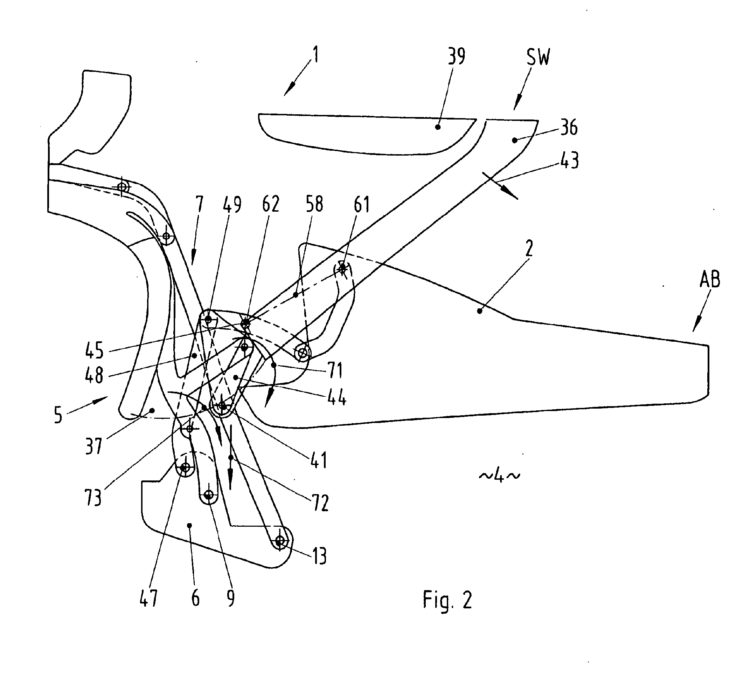

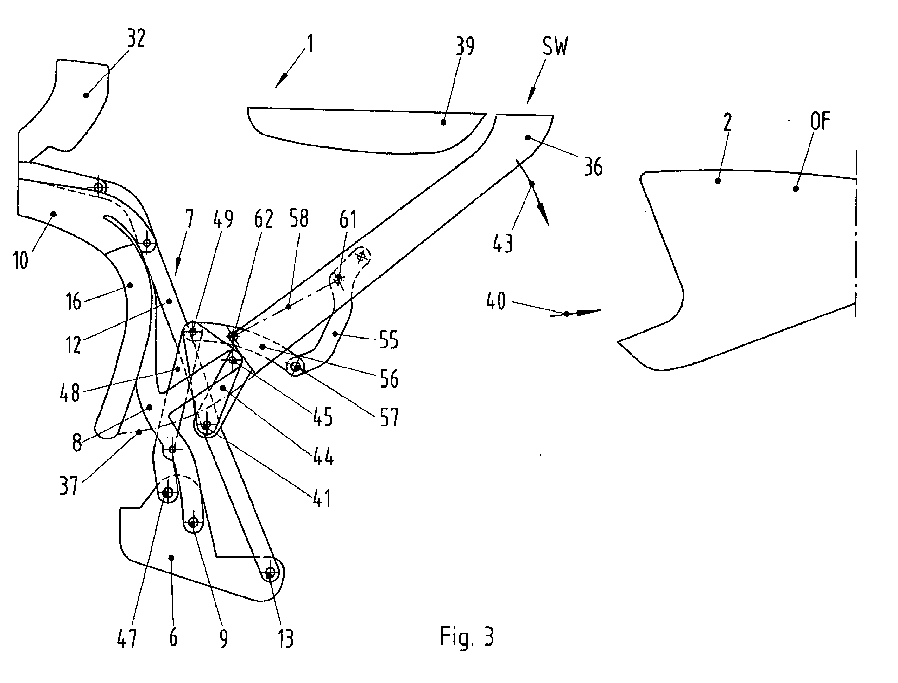

Die Stoffspanneinrichtung 35 weist den Stoffspannspriegel 36 auf, der in Fig. 1 in einer auf dem Verdeckkastendeckel 2 aufliegenden Spannstellung SP dargestellt ist. Wie Fig. 2 zeigt, kann der Stoffspannspriegel 36 auch in eine angehobene Schwenkstellung SW verlagert werden, in der er vorn Verdeckkastendeckel 2 so weit (etwa 45°) angehoben ist, dass der Verdeckkastendeckel 2 - wie Fig. 3 zeigt - in zumindest einer nach hinten (Pfeil 40) gerichteten Öffnungsbewegung geöffnet werden kann, um das Verdeck 1 in die bereits beschriebene Ablagestellung AT (Fig. 6) in den Verdeckkasten 4 verlagern zu können. Für das Anheben des Stoffspannspriegels 36 ist dieser schwenkbar am Hauptgestell 5 angelenkt, d.h. der Stoffspannspriegel 36 weist eine weiter unten beschriebene Spriegelschwenkachse 41 auf, die entweder am Verdecklager 6 oder bevorzugt - wie im gezeigten Ausführungsbeispiel - dem Hauptgestänge 7 zugeordnet ist. Um die Spriegelschwenkachse 41 kann der Stoffspannspriegel 36 aus seiner etwa waagerechten Spannstellung SP in Pfeilrichtung 42 nach oben in die Schwenkstellung SW (siehe Fig. 2) angehoben werden, so dass der Verdeckkastendeckel 2 in seine in Fig. 3 gezeigte Öffnungsstellung OF verlagert werden kann, damit das Verdeck 1 in dem Verdeckkasten 4 abgelegt werden kann. Um die Spriegelschwenkachse 41 kann der Stoffspannspriegel 36 in Pfeilrichtung 43 wieder abgesenkt werden, damit er nach dem Schließen des Verdecks 1 wieder auf dem Verdeckkastendeckel 2 abgelegt werden kann, wenn dieser sich in seiner Abdeckstellung AB befindet, in der er den Verdeckkasten 4 nach oben hin zumindest teilweise verschließt. Wie insbesondere aus Fig. 1 zu sehen ist, liegt die Spriegelschwenkachse 41 unterhalb des Verdeckbezugrandes 37, damit beim Anheben des Stoffspannspriegels 36 in die Schwenkstellung SW der Verdeckbezug 33 nicht auf Dehnung beansprucht wird. Üblicherweise sind derartige Verdeckbezüge 33 aus einem im Wesentlichen undehnbaren Verdeckstoff hergestellt, so dass durch die Lage der Spriegelschwenkachse 41 unterhalb des Verdeckbezugrandes 37 beim Schwenken des Stoffspannspriegels 36 eine übermäßige Belastung des Verdeckbezugs 33 vermieden wird.

Die Spriegelschwenkachse 41 wird getragen von einem beweglichen Spannspriegelhalter 44, der im gezeigten Ausführungsbeispiel plattenförmig ausgeführt ist und in einer Halterschwenkachse 45 mit dem Hauptgestänge 7, hier dem ersten Lenker 8, verbunden ist. Die Halterschwenkachse 45 wird getragen von einem Fortsatz 46, der sich vorn ersten Lenker 8 nach hinten, also etwa in Richtung des Verdeckkastendeckels 2 erstreckt. Bezüglich einer gedachten Horizontalen kann dieser Fortsatz 46 unter einem Winkel verlaufen, wenn das Verdeck 1, wie in Fig. 1 gezeigt, in der Schließstellung ST vorliegt. An dem Verdecklager 6 ist in einer ersten Lenkerschwenkachse 47 ein Spannspriegellenker 48 angelenkt, der mit seiner zweiten Lenkerschwenkachse 49 mit dem Spannspriegelhalter 44 verbunden ist. Der Spannspriegellenker 48 bildet somit eine Koppeleinrichtung 50 zwischen dem Spannspriegelhalter 44 und dem Hauptgestell 5, hier dem Verdecklager 6, des Verdecks 1, um den Spannspriegelhalter 44 beim Ablegen des Verdecks 1 bewegen zu können.

Die Stoffspanneinrichtung 35 umfasst neben dem Stoffspannspriegel 36 noch eine Antriebs- und Halteanordnung 51, die zwischen dem Stoffspannspriegel 36 und dem Hauptgestell 5, insbesondere dem Hauptgestänge 7, angeordnet ist. Im gezeigten Ausführungsbeispiel erstreckt sich die Antriebs- und Halteeinrichtung 51 zwischen einer ersten Antriebsschwenkachse 52 am Stoffspannspriegel 36 und einer zweiten Antriebsschwenkachse 53 am Spannspriegelhalter 44. Im gezeigten Ausführungsbeispiel fallen außerdem die zweite Lenkerschwenkachse 49 und die zweite Antriebsschwenkachse 53 zusammen. Die Antriebs- und Halteeinrichtung 51 besitzt eine Kniehebelanordnung 54 mit zwei Hebeln 55 und 56, die in ihren einander zugewandten Enden in einem Gelenk 57 schwenkbar miteinander verbunden sind. Die anderen Enden der Lenker 55 und 56 sind in den Antriebsschwenkachsen 52 und 53 - wie vorstehend erwähnt - beweglich gehalten. Die Antriebs- und Halteeinrichtung 51 umfasst ferner noch ein lineares Stellelement 58, insbesondere Hydraulikzylinder, welches Stellelement 58 einen Zylinder 59 und eine Kolbenstange 60 aufweist, die in Fig. 1 lediglich gestrichelt eingezeichnet ist. Jedenfalls besitzt das lineare Stellelement 58 zwei Enden 61 und 62, von denen jedes mit einem der Hebel 55 und 56 beweglich verbunden ist.

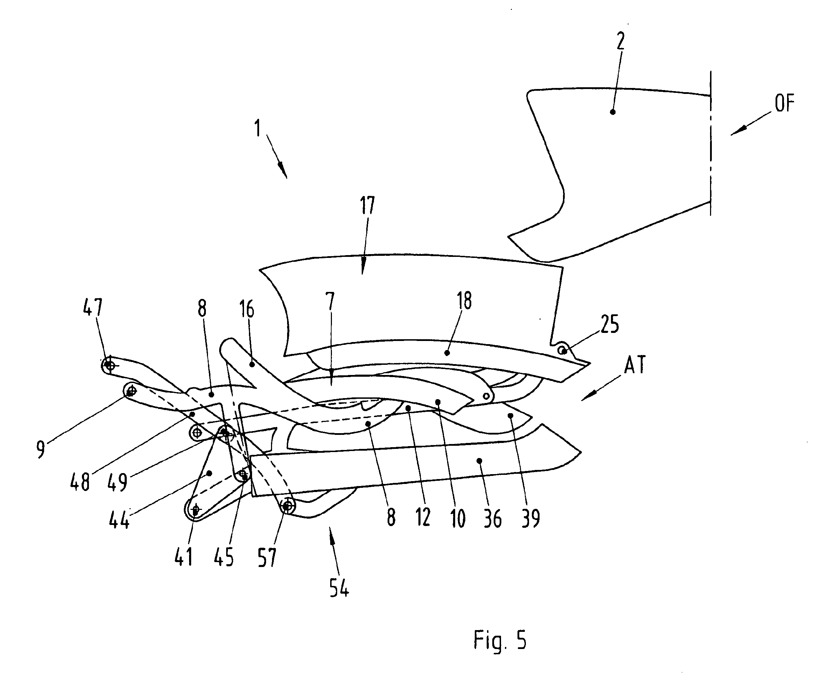

Ausgehend von der in Fig. 1 gezeigten Schließstellung ST des Verdecks 1 ergibt sich für die rückwärts gerichtete Ablagebewegung 63 des Verdecks 1 folgender Bewegungsablauf. Zunächst wird durch die Aktivierung des linearen Stellelements 58 sich dieses zwischen seinen beiden Enden 61 und 62 verkürzen, wie es in Fig. 2 gestrichelt dargestellt ist, wodurch der Stoffspannspriegel 36 in Pfeilrichtung 42 in die Schwenkstellung SW angehoben wird. Dabei wird lediglich die Heckscheibe 39 mitbewegt, wohingegen das Hauptgestänge 7 noch in der Schließstellung ST verbleibt. Sobald sich der Stoffspannspriegel 36 um seine Spriegelschwenkachse 41 in die Spannstellung SW bewegt hat, wird der Verdeckkastendeckel 2 in Pfeilrichtung 40 in seine Offenstellung OF bewegt, was in Fig. 3 dargestellt ist. Bei der weiteren Ablagebewegung 63 des Verdecks 1 gemäß Fig. 4 wird nun das Hauptgestänge 7 zusammengeklappt. Die Stoffspanneinrichtung 35 und insbesondere der Stoffspannspriegel 36 bleiben jedoch bezüglich des Hauptgestänges 7 in der Schwenkstellung SW. Die Ablagebewegung des Stoffspannspriegels 36 erfolgt jedoch um die Halterschwenkachse 45, d.h., dass der Stoffspannspriegel 36 relativ zum Spannspriegelhalter 44 nicht bewegt wird, sondern der Spannspriegelhalter 44 wird lediglich um die Halterschwenkachse 45 bewegt, wofür die Koppeleinrichtung 50 vorgesehen ist. Die Bewegungssteuerung des Spannspriegelhalters 44 übernimmt daher der vorstehend erwähnte Spannspriegellenker 48. Dessen erste und zweite Lenkerschwenkachsen 47 und 48 sowie die Halterschwenkachse 45 und die erste Hauptschwenkachse 9 des ersten Lenkers 8 bilden Gelenke eines Viergelenks. Dadurch ergibt sich eine Bewegungssteuerung des Spannspriegelhalters 44 und des Stoffspannspriegels 36 derart, dass der vordere Bereich des Stoffspannspriegels 36 benachbart zu seiner Spriegelschwenkachse 41 sehr tief im Verdeckkasten 4 abgelegt werden kann, was aus der Ablagestellung AT des Verdecks 1 in Fig. 5 hervorgeht. Ausgehend von der Fig. 5 wird bei abgelegtem Verdeck 1 noch der Verdeckkastendeckel 2 entgegen Pfeilrichtung 40 in seine Abdeckstellung AB verlagert, so dass er den Verdeckkasten 4 verschließt und das abgelegte Verdeck 1 abdeckt, was aus Fig. 6 ersichtlich ist.

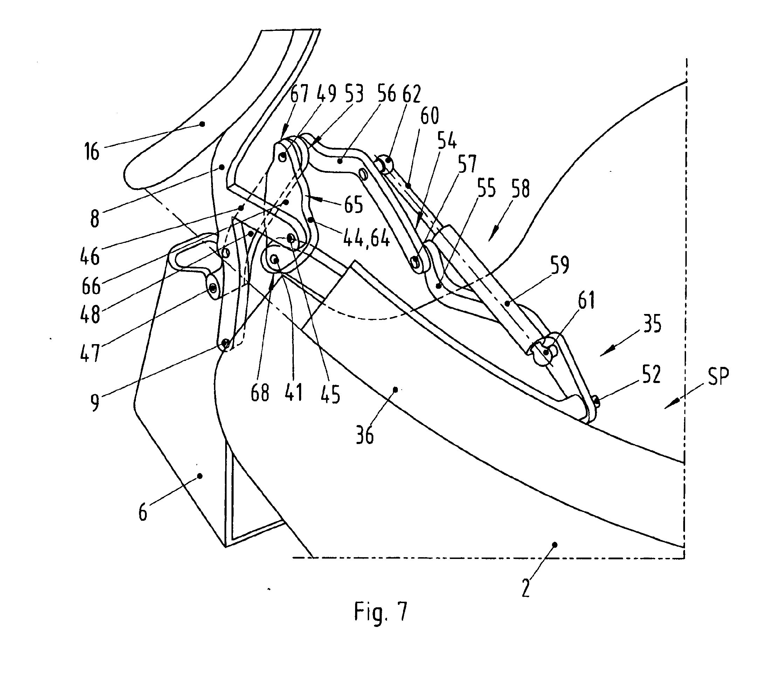

Anhand von Fig. 7 wird ein erstes Ausführungsbeispiel des Spannspriegelhalters 44 näher erläutert, der als einteilige Platte 64 ausgeführt ist, die die Schwenkachsen 41, 45 und 49 bzw. 53 trägt. Der Spannspriegellenker 48, der zweite Hebel 56 der Kniehebelanordnung 54 und der Stoffspannspriegel 36 liegen an einer dem Fahrgastraum 3 zugewandten Innenseite 65 des plattenförmigen Spannspriegelhalters 44, wohingegen der Fortsatz 46 des ersten Lenkers 48 an einer dem Verdeckbezug 33 zugewandten Außenseite 66 des Spannspriegelhalters 46 liegt. Damit sich die einzelnen Bauteile, die an dem Spannspriegelhalter 44 gelagert sind, bei der Ablagebewegung nicht gegenseitig sperren bzw. berühren, kann der plattenförmige Spannspriegelhalter 44 zusätzlich noch benachbart zu seinem oberen Ende 67 und/oder benachbart zu seinem unteren Ende 68 gekröpft sein, also eine Abwinkelung aufweisen, so dass die daran angelenkten Bauteile in verschiedenen Ebenen aneinander vorbeibewegbar sind.

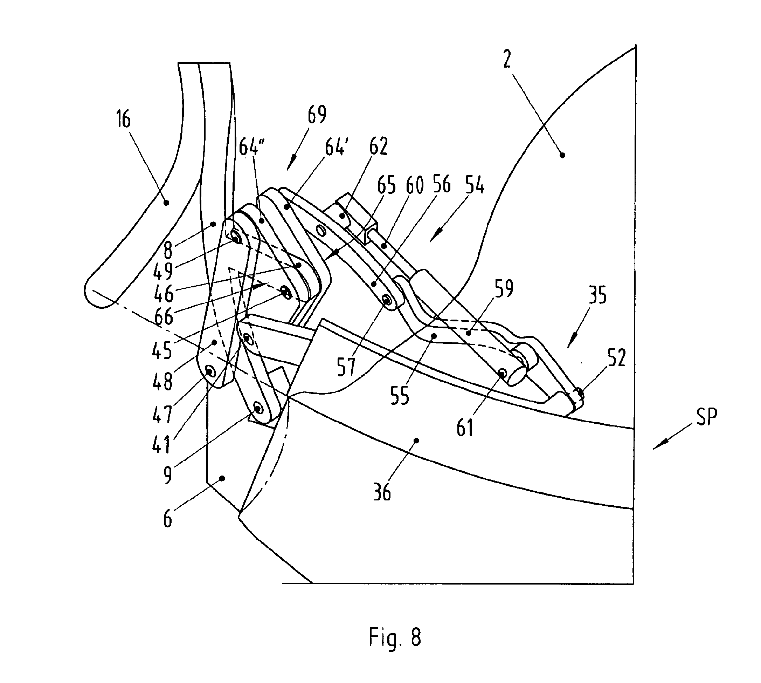

In Fig. 8 ist ein zweites Ausführungsbeispiel des Spannspriegelhalters 44 gezeigt. Er ist als zweiteiliges, plattenförmiges Element 69 mit zwei ebenen Platten 64' und 64" ausgeführt, die mit Abstand zueinander liegen, so dass dazwischen der Fortsatz 46 des ersten Lenkers 8 aufgenommen und in der entsprechenden Schwenkachse 45 mit dem Spannspriegelhalter 44 verbunden ist. Die Schwenkachse 53 für die Befestigung der Kniehebelanordnung 54 ist bei diesem Ausführungsbeispiel an der Innenseite 65 des Spannspriegelhalters 44 vorgesehen. Der Spannspriegellenker 48 und der Stoffspannspriegel 36 hingegen sind an der Außenseite 65 in ihrer jeweiligen Schwenkachse 49 bzw. 41 angelenkt.

Die Schwenkachsen 41, 45, 49 sind - bezogen auf die Schließstellung ST - wie folgt an dem Spannspriegelhalter 44 angeordnet, der gemäß Fig. 1 in einem bevorzugten Ausführungsbeispiel - in Seitenansicht gesehen - etwa dreieckförmig ausgebildet sein kann. Die Spriegelschwenkachse 41 liegt an der tiefsten Stelle an dem Spannspriegelhalter 44 und unterhalb des Verdeckbezugrandes 37, bevorzugt in einem Eckbereich der Dreieckskontur 70 des Spannspriegelhalters 44. Die Halterschwenkachse 45 liegt oberhalb der Spriegelschwenkachse 41 und in bevorzugter Ausführung oberhalb des Verdeckbezugrandes 37; sie ist außerdem gegenüber der Spriegelschwenkachse 41 nach hinten, also in Richtung Verdeckkastendeckel 2 bzw. Stoffspannspriegel 36 versetzt. Die zweite Lenkerschwenkachse 49 liegt oberhalb der Halterschwenkachse 45 und ist gegenüber dieser nach vorn versetzt und beispielsweise nahezu lotrecht oberhalb der Spriegelschwenkachse 41 angeordnet. Gleiches gilt für die zweite Antriebsschwenkachse 53, die mit der zweiten Lenkerschwenkachse 49 zusammenfällt. Dies ist jedoch nicht zwingend, vielmehr könnte die zweite Antriebsschwenkachse 53 an beliebiger Stelle an dem Spannspriegelhalter 44 liegen, ggf. auch an dem Hauptgestänge 7. Die erste Lenkerschwenkachse 47 liegt unterhalb und nach vorn versetzt gegenüber der Spriegelschwenkachse 41. Die erste Hauptschwenkachse 9 liegt unterhalb der ersten Lenkerschwenkachse 47 und etwa zwischen der zweiten Lenkerschwenkachse 47 und der Spriegelschwenkachse 41. Darunter und nach hinten versetzt liegt die zweite Hauptschwenkachse 13.

Bei der Ablagebewegung 63 des Verdecks 1 bewegt sich der Spannspriegelhalter 44 einerseits in einer rechtsgerichteten (im Uhrzeigersinn) Drehbewegung 71 um die Halterschwenkachse 45 (siehe Fig. 2) und andererseits wird er translatorisch (Pfeil 72) abgesenkt, so dass er in der Ablagestellung AT unterhalb des Hauptgestänges 7 zu liegen kommt, vorzugsweise etwa auf dem Niveau des Verdecklagers 6, wie ein Vergleich der Stellungen des Spannspriegelhalters 44 in den Fig. 2 und 6 zeigt. Zusätzlich folgt er bei der Ablagebewegung 63 einer nicht gezeigten Kreisbahn in Pfeilrichtung 73 um die erste Hauptschwenkachse 9. Da sich die Lage des Stoffspannspriegels 36 bezüglich des Spannspriegelhalters 44 dabei nicht ändert, bewegt sich der Stoffspannspriegel 36 entsprechend mit. Bei der Schließbewegung des Verdecks 1 bewegt sich der Spannspriegelhalter 44 in umgekehrten Richtungen.

## Patentansprüche

1. Verdeck (1) für ein Cabriolet, mit einem Hauptgestell (5), umfassend ein Verdecklager (6) und ein daran bewegbar angelenktes Hauptgestänge (7), mit einem am Hauptgestell (5) um eine Spriegelschwenkachse (41) bewegbaren Stoffspannspriegel (36), mit einem am Hauptgestänge (7) und am Stoffspannspriegel (36) zumindest abschnittweise befestigten Verdeckbezug (33), aufweisend einen unteren Verdeckbezugrand (37), und mit einer Antriebs- und Halteanordnung (51) für den Stoffspannspriegel (36), um diesen in einer einer Schließstellung (ST) des Verdecks (1) zugeordneten Spannstellung (SP) halten und um die Spriegelschwenkachse (41) in eine angehobene, den Verdeckbezug (33) entspannende und einer Ablagebewegung (63) des Verdecks (1) zugeordneten Schwenkstellung (SW) bewegen zu können, **dadurch gekennzeichnet, dass** zwischen dem Stoffspannspriegel (36) und dem Hauptgestell (5) ein Spannspriegelhalter (44) angeordnet ist, der die Spriegelschwenkachse (41) für den Stoffspannspriegel (36) trägt, und dass der Spannspriegelhalter (44) in einer Halterschwenkachse (45) mit dem Hauptgestell (5) verbunden ist, um die der Spannspriegelhalter (44) zusammen mit dem Stoffspannspriegel (36) während der Ablagebewegung (63) des Verdecks (1) bewegbar ist.

2. Verdeck nach Anspruch 1, **dadurch gekennzeichnet, dass** die Spriegelschwenkachse (41) - in Schließstellung (ST) des Verdecks (1) - unterhalb des Verdeckbezugsrandes (37) liegt.

3. Verdeck nach Anspruch 1, **dadurch gekennzeichnet, dass** die Halterschwenkachse (45) - in Schließstellung (ST) des Verdecks (1) - oberhalb der Spriegelschwenkachse (41) liegt.

4. Verdeck nach Anspruch 1 oder 2, **dadurch gekennzeichnet, dass** die Spriegelschwenkachse (41) - in Schließstellung (ST) des Verdecks (1) - oberhalb des Verdeckbezugsrandes (37) liegt.

5. Verdeck nach einem der vorhergehenden Ansprüche, **dadurch gekennzeichnet, dass** der Spannspriegelhalter (44) an dem Hauptgestänge (7) mit seiner Halterschwenkachse (45) angelenkt ist.

6. Verdeck nach einem der vorhergehenden Ansprüche, **dadurch gekennzeichnet, dass** für die Steuerung der Ablagebewegung (63) des Stoffspannspriegels (36) eine Koppeleinrichtung (50) zwischen Spannspriegelhalter (44) und Hauptgestell (5) vorgesehen ist.

7. Verdeck nach Anspruch 6, **dadurch gekennzeichnet, dass** die Koppeleinrichtung (50) durch einen Spannspriegellenker (48) gebildet ist, der in Lenkerschwenkachsen (47, 49) an dem Hauptgestänge (7) und am Spannspriegelhalter (44) gehalten ist.

8. Verdeck nach einem der vorhergehenden Ansprüche, **dadurch gekennzeichnet, dass** ein erster Lenker (8) des Hauptgestänges (7) in einer ersten Hauptschwenkachse (9) mit dem Verdecklager (6) verbunden ist, dass der Spannspriegellenker (48) mit seiner ersten Lenkerschwenkachse (47) an dem Verdecklager (6) und mit seiner zweiten Lenkerschwenkachse (49) an dem Spannspriegelhalter (44) angelenkt ist.

9. Verdeck nach einem vorhergehenden Ansprüche, **dadurch gekennzeichnet, dass** die erste und zweite Lenkerschwenkachse (47, 49) des Spannspriegellenkers (48), die Hauptschwenkachse (9) des ersten Lenkers (8) und die Halterschwenkachse (45) die Gelenke einer Viergelenkanordnung bilden.

10. Verdeck nach einem der vorhergehenden Ansprüche, **dadurch gekennzeichnet, dass** der Spannspriegelhalter (44) als zweiteiliges Element (69) und/oder als gekröpftes, einteiliges Element (Platte 64) ausgeführt ist.

11. Verdeck nach einem der vorhergehenden Ansprüche, **dadurch gekennzeichnet, dass** die Antriebs- und Halteanordnung (51) für den Stoffspannspriegel (36) zumindest ein eigenes lineares Stellelement (58) aufweist, das zwischen dem Stoffspannspriegel (36) und dem Hauptgestell (5), insbesondere dem Hauptgestänge (7), angeordnet ist.

12. Verdeck nach Anspruch 1 oder 11, **dadurch gekennzeichnet, dass** die Antriebs- und Halteanordnung (51) eine Kniehebelanordnung (54) umfasst, die den Stoffspannspriegel (36) mit dem Spannspriegelhalter (44) verbindet.

13. Verdeck nach Anspruch 11 und 12, **dadurch gekennzeichnet, dass** das lineare Stellelement (58) mit seinen Enden (61, 62) an der Kniehebelanordnung (54) angelenkt ist.

14. Verdeck nach einem der vorhergehenden Ansprüche, **dadurch gekennzeichnet, dass** an der zweiten Lenkerschwenkachse (47, 49) des Spannspriegellenkers (48) die Kniehebelanordnung (54) mit dem Spannspriegelhalter (44) verbunden ist.

## Claims

1. Soft top (1) for a convertible, with a main frame (5) comprising a soft top bearing (6) and a main linkage (7) coupled movably thereto, with a fabric-tensioning bow (36) which is movable on the main frame (5) about a bow pivot axis (41), with a soft top cloth (33) which is fastened at least in sections to the main linkage (7) and to the fabric-tensioning bow (36) and having a lower soft top cloth edge (37), and with a driving and holding arrangement (51) for the fabric-tensioning bow (36) in order to be able to hold the latter in a tensioning position (SP) assigned to a closed position (ST) of the soft top (1) and to be able to move said fabric-tensioning bow about the bow pivot axis (41) into a raised pivoted position (SW) which relaxes the soft top cloth (33) and is assigned to a putting-away movement (63) of the soft top (1), **characterized in that** a tensioning-bow holder (44) is arranged between the fabric-tensioning bow (36) and the main frame (5), said tensioning-bow holder bearing the bow pivot axis (41) for the fabric-tensioning bow (36), and **in that** the tensioning-bow holder (44) is connected to the main frame (5) in a holder pivot axis (45) about which the tensioning-bow holder (44) is movable together with the fabric-tensioning bow (36) during the putting-away movement (63) of the soft top (1).

2. Soft top according to Claim 1, **characterized in that** the bow pivot axis (41) - in the closed position (ST) of the soft top (1) - lies below the soft top cloth edge (37).

3. Soft top according to Claim 1, **characterized in that** the holder pivot axis (45) - in the closed position (ST) of the soft top (1) - lies above the bow pivot axis (41).

4. Soft top according to Claim 1 or 2, **characterized in that** the bow pivot axis (41) - in the closed position (ST) of the soft top (1) - lies above the soft top cloth edge (37).

5. Soft top according to one of the preceding claims, **characterized in that** the tensioning-bow holder (44) is coupled at the holder pivot axis (45) thereof to the main linkage (7).

6. Soft top according to one of the preceding claims, **characterized in that**, for the control of the putting-away movement (63) of the fabric-tensioning bow (36), a coupling device (50) is provided between the tensioning-bow holder (44) and main frame (5).

7. Soft top according to Claim 6, **characterized in that** the coupling device (50) is formed by a tensioning-bow link (48) which is held in link pivot axes (47, 49) on the main linkage (7) and on the tensioning-bow holder (44).

8. Soft top according to one of the preceding claims, **characterized in that** a first link (8) of the main linkage (7) is connected in a first main pivot axis (9) to the soft top bearing (6), and **in that** the tensioning-bow link (48) is coupled at the first link pivot axis (47) thereof to the soft top bearing (6) and at the second link pivot axis (49) thereof to the tensioning-bow holder (44).

9. Soft top according to one of the preceding claims, **characterized in that** the first and second link pivot axes (47, 49) of the tensioning-bow link (48), the main pivot axis (9) of the first link (8) and the holder pivot axis (45) form the joints of a four-bar arrangement.

10. Soft top according to one of the preceding claims, **characterized in that** the tensioning-bow holder (44) is designed as a two-part element (69) and/or as a bent, single-part element (plate 64).

11. Soft top according to one of the preceding claims, **characterized in that** the driving and holding arrangement (51) for the fabric-tensioning bow (36) has at least one dedicated linear adjustment element (58) which is arranged between the fabric-tensioning bow (36) and the main frame (5), in particular the main linkage (7).

12. Soft top according to Claim 1 or 11, **characterized in that** the driving and holding arrangement (51) comprises a toggle lever arrangement (54) which connects the fabric-tensioning bow (36) to the tensioning-bow holder (44).

13. Soft top according to Claims 11 and 12, **characterized in that** the linear adjustment element (58) is coupled at the ends (61, 62) thereof to the toggle lever arrangement (54).

14. Soft top according to one of the preceding claims, **characterized in that** the toggle lever arrangement (54) is connected to the tensioning-bow holder (44) at the second link pivot axis (47, 49) of the tensioning-bow link (48).

## Revendications

1. Capote (1) pour un cabriolet, avec un châssis principal (5), comprenant un logement de capote (6) et un arceau principal (7) y étant raccordé de façon articulée et mobile, avec un arceau de serrage de toile de capote (36) mobile au niveau du châssis principal (5) autour d'un axe de pivotement d'arceau de serrage (41), avec un recouvrement de capote (33) fixé au moins en partie au niveau de l'arceau principal (7) et de l'arceau de serrage de toile de capote (36) comportant un bord de recouvrement de capote (37) inférieur et avec un agencement d'entraînement et d'arrêt (51) pour l'arceau de serrage de toile de capote (36), pour le maintenir dans une position de serrage (SP) associée à une position fermée (ST) de la capote (1) et pour pouvoir déplacer l'axe de pivotement d'arceau de serrage (41) dans une position de pivotement (SW) relevée, détendant le recouvrement de capote (33) et associée à un mouvement de rangement (63) de la capote (1), **caractérisée en ce qu'**un support d'arceau de serrage (44) est disposé entre l'arceau de serrage de toile de capote (36) et le châssis principal (5), ledit support supportant l'axe de pivotement d'arceau de serrage (41) prévu pour l'arceau de serrage de toile de capote (36) et que le support d'arceau de serrage (44) est relié au châssis principal (5) suivant un axe de pivotement de support (45), pour permettre de déplacer le support d'arceau de serrage (44) conjointement avec l'arceau de serrage de toile de capote (36) pendant le mouvement de rangement (63) de la capote (1).

2. Capote selon la revendication 1, **caractérisée en ce que** l'axe de pivotement d'arceau de serrage (41) se positionne en dessous du bord de recouvrement de capote (37) en position fermée (ST) de la capote (1).

3. Capote selon la revendication 1, **caractérisée en ce que** l'axe de pivotement de support (45) se positionne au-dessus de l'axe de pivotement d'arceau de serrage (41) en position fermée (ST) de la capote (1).

4. Capote selon la revendication 1 ou 2, **caractérisée en ce que** l'axe de pivotement d'arceau de serrage (41) se positionne au-dessus du bord de recouvrement de capote (37) en position fermée (ST) de la capote (1).

5. Capote selon l'une quelconque des revendications précédentes, **caractérisée en ce que** le support d'arceau de serrage (44) est relié de façon articulée à l'arceau principal (7) avec son axe de pivotement de support (45).

6. Capote selon l'une quelconque des revendications précédentes, **caractérisée en ce que** pour commander le mouvement de rangement (63) de l'arceau de serrage de toile de capote (36), un dispositif de couplage (50) est prévu entre le support d'arceau de serrage (44) et le châssis principal (5).

7. Capote selon la revendication 6, **caractérisée en ce que** le dispositif de couplage (50) est constitué par un bras oscillant d'arceau de serrage (48) qui est maintenu dans les axes de pivotement de bras oscillant (47, 49) au niveau de l'arceau principal (7) et du support d'arceau de serrage (44).

8. Capote selon l'une quelconque des revendications précédentes, **caractérisée en ce qu'**un premier bras oscillant (8) de l'arceau principal (7) est relié au logement de capote (6) dans un premier axe principal de pivotement (9), que le bras oscillant d'arceau de serrage (48) est relié de façon articulée au logement de capote (6) avec son premier axe de pivotement de bras oscillant (47) et au support d'arceau de serrage (44) avec son deuxième axe de pivotement de bras oscillant (49).

9. Capote selon l'une quelconque des revendications précédentes, **caractérisée en ce que** les premier et deuxième axes de pivotement de bras oscillant (47, 49) du bras oscillant d'arceau de serrage (48), l'axe principal de pivotement (9) du premier bras oscillant (8) et l'axe de pivotement de support (45) forment les articulations d'un agencement en quadrilatère.

10. Capote selon l'une quelconque des revendications précédentes, **caractérisée en ce que** le support d'arceau de serrage (44) prend la forme d'un élément (69) en deux parties et/ou d'un élément en une seule partie coudé (plaque 64).

11. Capote selon l'une quelconque des revendications précédentes, **caractérisée en ce que** le dispositif d'entraînement et d'arrêt (51) comporte pour l'arceau de serrage de toile de capote (36) au moins un élément de réglage linéaire (58) propre qui est disposé entre l'arceau de serrage de toile de capote (36) et le châssis principal (5), notamment l'arceau principal (7).

12. Capote selon la revendication 1 ou 11, **caractérisée en ce que** le dispositif d'entraînement et d'arrêt (51) comprend une genouillère (54) qui relie l'arceau de serrage de toile de capote (36) au support d'arceau de serrage (44).

13. Capote selon la revendication 11 et 12, **caractérisée en ce que** l'élément de réglage (58) linéaire est relié de façon articulée à la genouillère (54) avec ses extrémités (61, 62).

14. Capote selon l'une quelconque des revendications précédentes, **caractérisée en ce que** la genouillère (54) est reliée au support d'arceau de serrage (44) au niveau du deuxième axe de pivotement de bras oscillant (47, 49) du bras oscillant d'arceau de serrage (48).
